# EUROPEAN PATENT APPLICATION

(11) **EP 4 428 211 A1**
(43) Date of publication of application: **11.09.2024**
(21) Application number: 24161839.6
(22) Date of filing: 06.03.2024
(51) Int. Cl.: C09J 153/02, C08L 51/06

(54) **HOT MELT ADHESIVE COMPOSITION**

(30) Priority: 09.03.2023 EP 23305315
(71) Applicant: Bostik SA, 92700 Colombes (FR)
(72) Inventor: FU, Shangyi, SHANGHAI (CN); LI, Danfeng, SHANGHAI (CN); LUO, Yi, SHANGHAI (CN)
(74) Representative: Arkema Patent

(57) **Abstract**

The invention relates to a hot melt adhesive composition comprising:
- at least one styrene block copolymer,
- at least one acid modified rubber, and
- a tackifying resin comprising at least one acid tackifying resin.

The invention also relates to the use of the hot melt adhesive composition according to the invention.

Furthermore, the invention relates to a method for bonding substrates implementing the hot melt adhesive composition according to the invention.

The invention further relates to an article comprising the hot melt adhesive composition according to the invention.

The invention also relates to the use of a combination of an acid modified rubber and an acid tackifying resin for improving the aged wet adhesiveness of a hot melt adhesive composition.

Finally, the invention relates to the use of a non-acid tackifying resin having a softening point of at least 110°C for improving the initial adhesiveness of a hot melt adhesive composition comprising a combination of an acid modified rubber and an acid tackifying resin.

## Description

### TECHNICAL FIELD

The present invention relates to a hot melt adhesive composition and its uses, a method for bonding substrates, an article and uses of specific compounds for improving one or more properties of a hot melt adhesive composition.

### TECHNICAL BACKGOUND

Hot melt adhesives (HM adhesives) are substances which are solid at room temperature and which generally comprise neither water nor solvent. They are applied in the molten state after heating to a temperature most often comprised between 130°C and 180°C, and solidify during cooling, thus forming a seal (or adhesive joint) which ensures the attachment of the substrates to be assembled.

Hot melt adhesives are widely used in various applications, in particular in nonwoven applications, such as disposable hygiene and medical products. These products generally aim at receiving and containing body fluids and are usually in contact or in close proximity to the skin.

When hot melt adhesives come into contact with moisture or liquid, such as body fluids, their adhesiveness usually decrease significantly, meaning that the adhesion between the substrates (bonded with HM adhesives) may not be maintained, causing the products themselves to collapse. In other words, the adhesiveness of hot melt adhesives in a wet state (wet adhesion) is a real concern. This wet adhesion is even worse after aging (aged wet adhesion), which is very common for most products experiencing a long-term storage or transportation.

However, there is no solution in the prior art to improve the aged wet adhesion of a HM adhesive.

Therefore, there is still a need for a hot melt adhesive composition which would have an improved adhesion, in particular an improved aged wet adhesion, especially in nonwoven material-based products, such as hydrophilic nonwoven material-based products.

### SUMMARY OF THE INVENTION

The invention relates to a hot melt adhesive composition comprising:
- at least one styrene block copolymer,
- at least one acid modified rubber, and
- a tackifying resin comprising at least one acid tackifying resin.

The invention also relates to the use of the hot melt adhesive composition according to the invention, as an adhesive for bonding two substrates together, or as a coating on the surface of a substrate.

Furthermore, the invention relates to a method for bonding substrates comprising:
- heating the hot melt adhesive composition according to the invention for at least a period of time long enough to render said composition liquid enough to be applied on a substrate, then
- coating said composition on a surface of a first substrate, then
- contacting the coated surface of the first substrate with a surface of a second substrate, so as to form an adhesive joint bonding the two substrates.

The invention further relates to an article comprising the hot melt adhesive composition according to the invention.

The invention also relates to the use of a combination of an acid modified rubber and an acid tackifying resin for improving the aged wet adhesiveness of a hot melt adhesive composition.

Finally, the invention relates to the use of a non-acid tackifying resin having a softening point of at least 110°C for improving the initial adhesiveness of a hot melt adhesive composition comprising a combination of an acid modified rubber and an acid tackifying resin.

The present invention makes it possible to address the need mentioned above. In particular, the hot melt adhesive composition according to the invention surprisingly makes it possible to significantly improve the aged wet peel strength of an assembly product, in particular after of a long period of aging (e.g. at least 3 months at about 55°C and 50% RH), while maintaining or increasing the aged dry peel strength, initial dry peel strength and initial wet peel strength.

Therefore, the present invention makes it possible to provide a hot melt adhesive composition having a good adhesiveness (in particular in a wet state), even after a long period of aging. The articles comprising said composition may thus experience a long-term storage or transportation while keeping their performance.

### DESCRIPTION OF THE INVENTION

### Hot melt adhesive composition

The term "hot melt" is used herein to describe that the adhesive composition is solid at ambient temperature (e.g. 18°C to 25°C) and requires to be heated to melt and then be applied on a substrate. The adhesive composition according to the invention is generally in a molten state at a temperature of at least 115°C, preferably at least 130°C.

### Styrene block copolymer

The hot melt adhesive composition according to the invention comprises at least one styrene block copolymer.

By "styrene block copolymer", it is intended a block copolymer comprising at least one polystyrene block. Preferably, the styrene block copolymer is a linear or radial block copolymer (preferably linear) comprising at least one non elastomeric block A being a polystyrene block and at least one elastomeric block B being a totally or partially hydrogenated or a non-hydrogenated diene polymer block.

Advantageously, the at least one styrene block copolymer is selected from SB, SI, SEB, SEP, SBBS, SBS, SEBS, SEPS, SEEPS, SIBS, SIS, and mixtures thereof.

By "SB", it is intended styrene-butadiene block copolymer.

By "SI", it is intended styrene-isoprene block copolymer.

By "SEB", it is intended styrene-ethylene-butylene block copolymer.

By "SEP", it is intended styrene-ethylene-propylene block copolymer.

By "SBBS", it is intended styrene-butadiene-butylene-styrene block copolymer.

By "SBS", it is intended styrene-butadiene-styrene block copolymer.

By "SEBS", it is intended styrene-ethylene-butylene-styrene block copolymer.

By "SEPS", it is intended styrene-ethylene-propylene-styrene block copolymer.

By "SEEPS", it is intended styrene-ethylene-ethylene-propylene-styrene block copolymer.

By "SIBS", it is intended styrene-isoprene-butadiene-styrene block copolymer.

By "SIS", it is intended styrene-isoprene-styrene block copolymer.

Preferably, the at least one styrene block copolymer is selected from SBBS, SBS, SEBS, SEPS, SEEPS, SIBS, SIS, and mixtures thereof.

More preferably, the at least one styrene block copolymer is selected from SBBS, SBS, SEBS, SEPS, SIS, and mixtures thereof.

Even more preferably, the at least one styrene block copolymer is selected from SBS, SEBS, SIS, and mixtures thereof.

The styrene triblock copolymers may be obtained using processes known per se and are commercially available. The processes for obtaining these commercial products may result in the formation of variable amounts of diblock compounds of formula A-B. Thus, when the at least one styrene block copolymer comprises a triblock copolymer (in particular as described above), it may further comprise between 0 % and 90 % by weight of diblock compounds, with respect to the total weight of styrene block copolymer(s).

The at least one styrene block copolymer may have a styrene content comprised between 10 % and 50 % by weight with respect to the total weight of the copolymer. The styrene content is the weight percentage of styrene moieties (present in the polystyrene block(s)) with respect to the total weight of the copolymer.

In the context of the invention, the ranges of values are understood to be inclusive. For example, the range "between 10 % and 50 %" includes, in particular, the values 10 % and 50%.

The at least one styrene block copolymer may have a number average molecular weight (Mn) comprised between 50000 g/mol and 500000 g/mol, preferably between 100000 g/mol and 500000 g/mol. The number average molecular weight can be measured by size exclusion chromatography, preferably with a polystyrene calibration.

The total content of the at least one styrene block copolymer in the hot melt adhesive composition according to the invention may be comprised between 5 % and 50 % by weight with respect to the total weight of said composition, preferably between 10 % and 40 % by weight, more preferably between 10 % and 30 % by weight.

### Acid modified rubber

The hot melt adhesive composition according to the invention comprises at least one acid modified rubber.

By "acid modified rubber", it is intended a rubber comprising carbon-carbon double bonds and at least one carboxylic acid group (-COOH) and/or carboxylic anhydride group, preferably at least one carboxylic acid group.

Advantageously, the acid modified rubber is an acid modified rubber comprising carbon-carbon double bonds selected from acid modified polyisoprene, acid modified polybutadiene, acid modified polypentadiene, acid modified butadiene isoprene copolymer, acid modified isobutene isoprene copolymer, acid modified polychloroprene, acid modified nitrile butadiene copolymer, and mixtures thereof, preferably from acid modified polyisoprene, acid modified polybutadiene, and mixtures thereof, more preferably from acid modified polyisoprene. Said acid modified rubber may be partially hydrogenated, but is preferably non-hydrogenated.

Advantageously, the acid modified rubber is a rubber comprising carbon-carbon double bonds modified with at least one acid compound comprising at least one non-aromatic carbon-carbon double bond and at least one carboxylic acid group and/or carboxylic anhydride group. Said acid compound may be selected from maleic acid, dimethylmaleic acid, fumaric acid, itaconic acid, tetrahydrophthalic acid, citraconic acid, acrylic acid, methacrylic acid, crotonic acid, isocrotonic acid, tiglic acid, 3-butenoic acid, (2-, 3- or 4-)pentenoic acid, (2-, 3-, 4- or 5-)hexenoic acid, cinnamic acid, sorbic acid, and derivatives thereof (in particular anhydride or monoester derivatives), preferably from maleic acid, dimethylmaleic acid, fumaric acid, itaconic acid, tetrahydrophthalic acid, citraconic acid, and derivatives thereof, more preferably from maleic acid and derivatives thereof.

Preferably, the at least one acid compound is a monoester derivative of maleic acid, dimethylmaleic acid, fumaric acid, itaconic acid, tetrahydrophthalic acid and/or citraconic acid, preferably of maleic acid, for example maleic acid monomethyl ester.

The acid modified rubber may be obtained by grafting the at least one acid compound onto the rubber main chain or by copolymerizing the at least one acid compound with the monomers used for obtaining the rubber (e.g. isoprene monomers when the rubber is polyisoprene), preferably by grafting.

According to a preferred embodiment, the acid modified rubber is:
- polyisoprene and/or polybutadiene modified with
- at least one acid compound selected from maleic acid, dimethylmaleic acid, fumaric acid, itaconic acid, tetrahydrophthalic acid, citraconic acid, and derivatives thereof, preferably from monoester derivatives thereof.

In particular, the acid modified rubber is polyisoprene modified with at least one acid compound selected from maleic acid and derivatives thereof, preferably from monoester derivatives thereof.

The functionality of the acid modified rubber (i.e. the number of acid compounds introduced per rubber molecule) may vary between 1 and 20, preferably between 3 and 15, more preferably between 8 and 12, for example 10.

The number average molecular weight of the acid modified rubber may vary between 5000 g/mol and 50000 g/mol, preferably between 15000 g/mol and 35000 g/mol.

The number average molecular weight can be measured by size exclusion chromatography (or SEC), which is also denoted by the term "gel permeation chromatography" (or GPC), preferably with a polystyrene calibration.

Advantageously, the acid modified rubber is liquid at 23°C and at atmospheric pressure (e.g. 101325 Pa).

The acid modified rubber may have a glass transition temperature of less than -50°C. The glass transition temperature can be measured using differential scanning calorimetry (DSC) according to standard ASTM D 3418-82.

The acid modified rubber may have a viscous flow temperature of less than 15°C, preferably less than 5°C. The viscous flow temperature is the temperature at which the acid modified rubber changes between an elastic state and a viscous state. It may be measured using differential scanning calorimetry (DSC) according to standard ASTM D 3418-82.

An example of a commercial acid modified rubber is LIR-41 0 (by Kuraray), which is polyisoprene grafted with maleic acid monomethyl ester of formula: 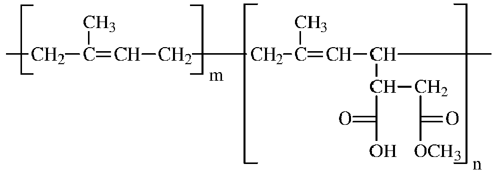 wherein m is an integer such that the molecular weight of the acid modified rubber is of about 30000 g/mol and n is equal to 10.

The total content of the at least one acid modified rubber in the hot melt adhesive composition according to the invention may be comprised between 1 % and 15 % by weight with respect to the total weight of said composition, preferably between 2 % and 10 % by weight, more preferably between 2 % and 5 % by weight.

### Tackifying resin

The hot melt adhesive composition according to the invention comprises a tackifying resin comprising at least one acid tackifying resin.

Preferably, the tackifying resin comprises at least one acid modified tackifying resin.

The tackifying resin may also comprise at least one non-acid tackifying resin.

According a preferred embodiment, the tackifying resin comprises at least one acid modified tackifying resin and at least one non-acid tackifying resin.

The total content of the tackifying resin in the hot melt adhesive composition according to the invention may be comprised between 10% and 80 % by weight with respect to the total weight of said composition, preferably between 20 % and 70 % by weight, more preferably between 30 % and 65 % by weight.

### • Acid tackifying resin

By "acid tackifying resin", it is intended a tackifying resin comprising at least one carboxylic acid group and/or carboxylic anhydride group, preferably at least one carboxylic acid group.

Advantageously, the acid tackifying resin has an acid value of at least 1.5 mg KOH per gram of said resin, preferably comprised between 1.5 and 60 mg KOH/g, more preferably between 1.8 and 30 mg KOH/g, even more preferably between 1.9 and 10 mg KOH/g.

The acid value can be measured according to ASTM D-1639.

Unless otherwise stated, standards mentioned throughout the present application are those in effect on the date the application is filed.

The acid tackifying resin may be an acid natural tackifying resin (i.e. a tackifying resin having naturally at least one carboxylic acid/anhydride group, which may further be modified as long as the resin still comprise at least one carboxylic acid/anhydride group) or an acid modified tackifying resin (i.e. a tackifying resin modified to have at least one carboxylic acid/anhydride group). Preferably, the acid tackifying resin is an acid modified tackifying resin.

Examples of acid natural tackifying resin are natural and modified rosin such as gum rosin, wood rosin, tall-oil rosin, distilled rosin, hydrogenated rosin, dimerized rosin and polymerized rosin.

The acid modified tackifying resin may be selected from acid modified phenolic terpene resins, acid modified petroleum resins and mixtures thereof, preferably from acid modified petroleum resins and mixtures thereof.

The acid modified petroleum resin may be selected from:
- acid modified aliphatic petroleum hydrocarbon resins (C5), wherein the main chain results from the polymerization of C5-hydrocarbon monomers,
- acid modified aromatic petroleum hydrocarbon resins (C9), wherein the main chain results from the polymerization of C9-hydrocarbon monomers,
- acid modified petroleum hydrocarbon resins (C5/C9), wherein the main chain results from the polymerization of a blend of aliphatic C5- and aromatic C9-hydrocarbon monomers,
- acid modified dicyclopentadiene petroleum resins (DCPD), wherein the main chain results from the polymerization of dicyclopentadiene monomers,
- their corresponding hydrogenated derivatives (resulting from a subsequent total or partial hydrogenation thereof), and
- mixtures thereof.

Preferably, the acid modified petroleum resin is selected from acid modified petroleum C5/C9-hydrocarbon resins, acid modified DCPD petroleum resins, their corresponding hydrogenated derivatives and mixtures thereof.

As examples of C5-hydrocarbon monomers useful to prepare the main chain of the aliphatic petroleum C5-hydrocarbon resin or of the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene, in particular trans-1,3-pentadiene, cis-1,3-pentadiene and/or 2-methyl-2-butene.

As examples of C9-hydrocarbon monomers useful to prepare the main chain of the aromatic petroleum C9-hydrocarbon resin or of the petroleum C5/C9-hydrocarbon resin, mention may be made of vinyltoluene, indene, methylstyrene, α-methylstyrene, styrene and/or methylindene.

The acid modified tackifying resin may be a tackifying resin modified with at least one acid compound comprising at least one non-aromatic carbon-carbon double bond and at least one carboxylic acid group and/or carboxylic anhydride group. Said acid compound may be selected from maleic acid, dimethylmaleic acid, fumaric acid, itaconic acid, tetrahydrophthalic acid, citraconic acid, acrylic acid, methacrylic acid, crotonic acid, isocrotonic acid, tiglic acid, 3-butenoic acid, (2-, 3- or 4-)pentenoic acid, (2-, 3-, 4- or 5-)hexenoic acid, cinnamic acid, sorbic acid, and derivatives thereof (in particular anhydride derivatives), preferably from maleic acid, dimethylmaleic acid, fumaric acid, itaconic acid, tetrahydrophthalic acid, citraconic acid, and derivatives thereof, more preferably from maleic acid and derivatives thereof.

According to a preferred embodiment, the acid modified tackifying resin is:
- an aliphatic petroleum C5-hydrocarbon resin, an aromatic petroleum C9-hydrocarbon resin, a petroleum C5/C9-hydrocarbon resin, a DCPD petroleum resin and/or a hydrogenated derivative thereof, modified with
- at least one acid compound selected from maleic acid, dimethylmaleic acid, fumaric acid, itaconic acid, tetrahydrophthalic acid, citraconic acid, and derivatives thereof.

In particular, the acid modified tackifying resin is:
- a petroleum C5/C9-hydrocarbon resin, a DCPD petroleum resin and/or a hydrogenated derivative thereof, modified with
- at least one acid compound selected from maleic acid and derivatives thereof.

The weight average molecular weight of the acid tackifying resin may vary between 1000 g/mol and 6000 g/mol, preferably between 2000 g/mol and 4000 g/mol.

The weight average molecular weight can be measured by size exclusion chromatography (or SEC), which is also denoted by the term "gel permeation chromatography" (or GPC), preferably with a polystyrene calibration.

The acid tackifying resin may have a softening point of at least 90°C, preferably between 90°C and 130°C. The softening point can be measured by a ring and ball method, for example according to ASTM E28.

The total content of the at least one acid tackifying resin in the hot melt adhesive composition according to the invention may be comprised between 10 % and 60 % by weight with respect to the total weight of said composition, preferably between 15 % and 50 % by weight, more preferably between 20 % and 40 % by weight.

### • Non-acid tackifying resin

Advantageously, the tackifying resin further comprises at least one non-acid tackifying resin.

By "non-acid tackifying resin", it is intended a tackifying resin which does not comprise a carboxylic acid group and/or a carboxylic anhydride group.

The non-acid tackifying resin may be selected from:
- glycerol and pentaerythritol esters of natural and modified rosins, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- phenolic-modified terpene resins, such as those resulting from the condensation, in an acidic medium, of a terpene and a phenol,
- aliphatic petroleum hydrocarbon resins (C5) resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9) resulting from the polymerization of a blend of aliphatic C5- and aromatic C9-hydrocarbon monomers,
- dicyclopentadiene petroleum resins (DCPD) resulting from the polymerization of dicyclopentadiene monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1 ,3-pentadiene, 2-methyl-2-butene, cyclopentadiene, methylcyclopentadiene and/or cyclopentene, in particular trans-1,3-pentadiene, cis-1,3-pentadiene and/or 2-methyl-2-butene.

As examples of C9-hydrocarbon monomers useful to prepare the aromatic petroleum C9-hydrocarbon resin or the petroleum C5/C9-hydrocarbon resin, mention may be made of vinyltoluene, indene, methylstyrene, α-methylstyrene, styrene and/or methylindene.

Preferably, the non-acid tackifying resin is selected from:
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD) resulting from the polymerization of dicyclopentadiene monomers,
- their corresponding hydrogenated derivatives (resulting from a subsequent total or partial hydrogenation thereof), and
- mixtures thereof.

More preferably, the non-acid tackifying resin is selected from:
- aromatic petroleum hydrocarbon resins (C9), resulting from the polymerization of C9-hydrocarbon monomers,
- petroleum hydrocarbon resins (C5/C9) resulting from the polymerization of a blend of aliphatic C5- and aromatic C9-hydrocarbon monomers,
- their corresponding hydrogenated derivatives (resulting from a subsequent total or partial hydrogenation thereof), and
- mixtures thereof.

According to a preferred embodiment, the non-acid tackifying resin is hydrogenated (totally or partially).

The non-acid tackifying resin may have a softening point of at least 90°C, preferably between 90°C and 130°C, in particular between 110°C and 130°C. The softening point can be measured by a ring and ball method, for example according to ASTM E28.

The total content of the at least one non-acid tackifying resin in the hot melt adhesive composition according to the invention may be comprised between 10 % and 60 % by weight with respect to the total weight of said composition, preferably between 15 % and 50 % by weight, more preferably between 20 % and 40 % by weight.

### Plasticizer

Advantageously, the hot melt adhesive composition according to the invention further comprises at least one plasticizer.

The at least one plasticizer may be selected from naphthenic oils, paraffinic oils, olefin oligomers, and mixtures thereof, preferably from naphthenic oils, paraffinic oils, and mixtures thereof.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

By "olefin oligomers", it is intended polyolefins having a low weight average molecular weight, preferably between about 100 and about 10000 g/mol. The weight average molecular weight can be measured as indicated above (by size exclusion chromatography, preferably with a polystyrene calibration).

In the present application, by "about X", it is intended more or less 10% the value of X.

As examples of olefin oligomers, mention may be made of polypropylene, polybutene, hydrogenated polyisopropene and hydrogenated polybutadiene.

The total content of the at least one plasticizer in the hot melt adhesive composition according to the invention may be comprised between 10 % and 40 % by weight with respect to the total weight of said composition, preferably between 15 % and 30 % by weight.

### Other additives

The hot melt adhesive composition according to the invention may further comprise one or more additives selected from additional polymers other than styrene block copolymers, ultraviolet (UV) stabilizers (or antioxidants), waxes, fillers, pigments, ultraviolet or infrared fluorescent agents, and mixtures thereof, in particular from additional polymers other than styrene block copolymers, UV stabilizers, and mixtures thereof.

Advantageously, the hot melt adhesive composition according to the invention comprises one or more additives selected from UV stabilizers (or antioxidants).

The total content of additives in the composition according to the invention may be up to 20 % by weight with respect to the total weight of the composition, preferably from 0.1 % to 5 % by weight.

The hot melt adhesive composition according to the invention may further comprise additional polymers other than styrene block copolymers such as polyolefins, amorphous poly-alpha-olefins, ethyl-vinyl-acetate polymers (EVA) and/or polyamides, preferably polyolefins (in particular polypropylene).

The weight average molecular weight of said additional polymers may be comprised between 12000 g/mol and 100000 g/mol, preferably between 30000 and 80000 g/mol.

The content of said additional polymers may be up to 5 % by weight with respect to the total weight of the hot melt adhesive composition according to the invention.

Advantageously, the hot melt adhesive composition according to the invention comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered amines (also named HALS for "hindered amine light stabilizers"), hindered phenols and multifunction phenols, such as sulfur and phosphorous-containing phenols, preferably hindered phenols and multifunction phenols.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or or 4,4'-bis(α,α-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

The UV stabilizer (or antioxidant) content may be between 0.1 % and 5 % by weight with respect to the total weight of the hot melt adhesive composition according to the invention, preferably between 0.3 % and 3 % by weight.

The hot melt adhesive composition according to the invention may further comprise a wax, such as a paraffin wax, a Fischer-Tropsch wax and/or an EVA wax.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "EVA wax", it is intended oligomeric polymer compounds that are prepared via a process comprising the co-polymerization of ethylene monomers and vinyl acetate monomers and that have the following properties: (a) solid at room temperature; (b) low melting point; and (c) insoluble in water. The EVA copolymers of the EVA wax may be functionalized or modified in any possible manner.

The wax content may be up to 10 % by weight with respect to the total weight of the hot melt adhesive composition according to the invention, preferably up to 5 % by weight.

The hot melt adhesive composition according to the invention may further comprise a filler. Typical fillers include talc, calcium carbonate, clay, silica, mica, wollastonite, feldspar, aluminum silicate, alumina, hydrated alumina, glass microspheres, ceramic microspheres and/or thermoplastic microspheres.

The filler content may be up to 10 % by weight with respect to the total weight of the hot melt adhesive composition according to the invention, preferably up to 5 % by weight.

The hot melt adhesive composition according to the invention may further comprise a pigment. The pigment may be an organic and/or inorganic pigment, for example titanium dioxide.

The pigment content may be up to 5 % by weight with respect to the total weight of the hot melt adhesive composition according to the invention, preferably up to 3 % by weight.

The hot melt adhesive composition according to the invention may further comprise an ultraviolet or infrared fluorescent agent such as 2-(6-hydroxy-3-oxo-(3H)-xanthen-9-yl) benzoic acid, disodium 6-hydroxy-3-oxo-9-xanthene-o-benzoate and/or 8-hydroxy-1,3,6-pyrenetrisulfonic acid trisodium salt.

The content of ultraviolet or infrared fluorescent agent may be up to 3 % by weight with respect to the total weight of the hot melt adhesive composition according to the invention, preferably up to 1 % by weight.

### Other features of the hot melt adhesive composition according to the invention

According to an embodiment, the hot melt adhesive composition according to the invention comprises:
- 5 % to 50 % by weight of at least one styrene block copolymer,
- 1 % to 15 % by weight of at least one acid modified rubber, preferably a rubber comprising carbon-carbon double bonds modified with at least one acid compound selected from maleic acid, dimethylmaleic acid, fumaric acid, itaconic acid, tetrahydrophthalic acid, citraconic acid, and derivatives thereof,
- 10 % to 60 % by weight of at least one acid modified tackifying resin, preferably a petroleum resin modified with at least one acid compound selected from maleic acid, dimethylmaleic acid, fumaric acid, itaconic acid, tetrahydrophthalic acid, citraconic acid, and derivatives thereof,
- 10 % to 60 % by weight of at least one non-acid tackifying resin,
- 10 % to 40 % by weight of at least one plasticizer, and
- optionally up to 20 % by weight of one or more additives selected from additional polymers other than styrene block copolymers, UV stabilizers (or antioxidants), waxes, fillers, pigments, ultraviolet or infrared fluorescent agents, and mixtures thereof,
the weight percentages being with respect to the total weight of said composition.

In this embodiment, the tackifying resin thus comprises at least one acid modified tackifying resin and at least one non-acid tackifying resin, preferably consists of at least one acid modified tackifying resin and at least one non-acid tackifying resin.

Preferably, the hot melt adhesive composition according to the invention consists essentially of the ingredients mentioned above. By "consisting essentially", it is intended that said composition comprises less than 5 % by weight of ingredients other than the aforementioned ingredients, relative to the total weight of said composition, preferably less than 2% by weight, even more preferably less than 1% by weight.

The ingredients of this embodiment and their particular contents are as described above, including the embodiments and preferred features.

According to a particular embodiment, the hot melt adhesive composition according to the invention comprises:
- 10 % to 30 % by weight of at least one styrene block copolymer, the at least one styrene block copolymer being preferably selected from SBBS, SBS, SEBS, SEPS, SEEPS, SIBS, SIS, and mixtures thereof,
- 2 % to 5 % by weight of at least one acid modified rubber, the acid modified rubber being preferably:
   - polyisoprene and/or polybutadiene modified with
   - at least one acid compound selected from maleic acid, dimethylmaleic acid, fumaric acid, itaconic acid, tetrahydrophthalic acid, citraconic acid, and derivatives thereof, preferably from monoester derivatives thereof,
- 20 % to 40 % by weight of at least one acid modified tackifying resin, the acid modified tackifying resin being preferably:
   - an aliphatic petroleum C5-hydrocarbon resin, an aromatic petroleum C9-hydrocarbon resin, a petroleum C5/C9-hydrocarbon resin, a DCPD petroleum resin and/or a hydrogenated derivative thereof, modified with
   - at least one acid compound selected from maleic acid, dimethylmaleic acid, fumaric acid, itaconic acid, tetrahydrophthalic acid, citraconic acid, and derivatives thereof,
- 20 % to 40 % by weight of at least one non-acid tackifying resin, the non-acid tackifying resin being preferably selected from aliphatic petroleum C5-hydrocarbon resins, aromatic petroleum C9-hydrocarbon resins, petroleum C5/C9-hydrocarbon resins, DCPD petroleum resins, hydrogenated derivatives thereof,
- 15 % to 30 % by weight of at least one plasticizer, preferably selected from naphthenic oils, paraffinic oils, and mixtures thereof, and
- optionally 0.1 % to 5 % by weight of one or more additives selected from additional polymers other than styrene block copolymers, UV stabilizers (or antioxidants), waxes, fillers, pigments, ultraviolet or infrared fluorescent agents, and mixtures thereof, in particular from UV stabilizers,
the weight percentages being with respect to the total weight of said composition.

In this embodiment, the tackifying resin thus comprises at least one acid modified tackifying resin and at least one non-acid tackifying resin, preferably consists of at least one acid modified tackifying resin and at least one non-acid tackifying resin.

Preferably, the hot melt adhesive composition according to the invention consists essentially of the ingredients mentioned above.

The ingredients of this embodiment and their particular contents are as described above, including the embodiments and preferred features.

The viscosity at 160°C of the hot melt adhesive composition according to the invention may vary between 1000 and 10000 mPa.s, preferably between 2000 and 8000 mPa.s. The viscosity may be measured according to the standard GB/T 2794-2013, with a Brookfield viscometer.

The softening point of the hot melt adhesive composition according to the invention may vary between 70°C and 130°C, preferably between 80°C and 120°C. The softening point can be measured according to the standard GB/T 15332-1994, for example with a RKA 5 softening point tester.

Advantageously, the hot melt adhesive composition according to the invention has an improved aged wet adhesiveness, even after a long period of aging (e.g. at least 3 months at about 55°C and 50% RH), in particular compared to a hot melt adhesive composition lacking the acid modified rubber and the acid tackifying resin. The aged wet adhesiveness is preferably an aged wet peel strength which may be measured for a non-woven/polyethylene laminated specimen stored for at least 3 months at about 55°C and 50% RH, for example as described in Example 1. Said aged wet peel strength is preferably of at least 0.35 N/25 mm.

The hot melt adhesive composition according to the invention can be prepared by mixing its ingredients under heat, preferably at a temperature ranging from 150°C to 180°C and atmospheric pressure. An example of preparation is described in Example 2.

### Use of the hot melt adhesive composition

The invention also relates to the use of the hot melt adhesive composition according to the invention as an adhesive for bonding two substrates together, or as a coating on the surface of a substrate.

The substrates to be bonded may be different or of same nature, with various forms. Preferably, the substrates are each a layer (or film), strands or fluff.

Preferably, each substrate may be chosen independently from one another among nonwoven fabric (preferably hydrophilic), tissue, absorbent fluff, super absorbent polymer (SAP), composite material, plastics which may be elastomeric or non-elastomeric (for example styrene block copolymers, polyurethanes and/or polyolefins), and any mixture thereof.

According to a preferred embodiment, at least one of the substrates to be bonded is a nonwoven fabric (preferably hydrophilic). Preferably, the other substrate is a plastic, in particular a polyolefin (e.g. polypropylene, polyethylene).

The surface to be coated may comprise nonwoven fabric (preferably hydrophilic), tissue, absorbent fluff, super absorbent polymer, composite material, plastics which may be elastomeric or non-elastomeric (for example styrene block copolymers, polyurethanes and/or polyolefins), and any mixture thereof. Preferably, the surface to be coated comprises a nonwoven fabric (preferably hydrophilic), polypropylene, polyethylene, polyethylene terephthalate, cotton, bamboo, silk and/or polylactic acid, in particular a nonwoven fabric.

### Method for bonding substrates

Furthermore, the invention relates to a method for bonding substrates comprising:
- heating the hot melt adhesive composition according to the invention, e.g. at a temperature comprised between 130°C and 180°C, for at least a period of time long enough to render said composition liquid enough to be applied on a substrate (for example at least two hours), then
- coating said composition on a surface of a first substrate, then
- contacting the coated surface of the first substrate with a surface of a second substrate, so as to form an adhesive joint bonding the two substrates.

Preferably, the bonded substrates form an assembly product (or laminate).

The substrates implemented in said method may be different or of same nature, with various forms. Preferably, the substrates are each a layer (or film), strands or fluff.

The substrates to be implemented are vary varied. Preferably, each substrate is selected independently from one another among nonwoven fabric (preferably hydrophilic), tissue, absorbent fluff, super absorbent polymer (SAP), composite material, plastics which may be elastomeric or non-elastomeric (for example styrene block copolymers, polyurethanes and/or polyolefins), and any mixture thereof.

According to a preferred embodiment, at least one of the substrates is a nonwoven fabric (preferably hydrophilic). Preferably, the other substrate is a plastic, in particular a polyolefin (e.g. polypropylene, polyethylene).

The hot melt adhesive composition according to the invention may be coated or applied with a variety of application techniques known in the art, which include contact type application (such as slot die coating) and non-contact type application (such as spraying or fiberization), preferably contact type application.

The amount of coated hot melt adhesive composition by surface unit can vary in a very large range, for example from 0.1 to 50 g/m², depending on the substrates implemented.

Preferably, the method for bonding substrates according to the invention further comprises a cooling step after the contacting step, preferably at room temperature (e.g. 18-25°C), in order to solidify the hot melt adhesive composition.

### Article

The invention further relates to an article comprising the hot melt adhesive composition according to the invention.

According to a preferred embodiment, said composition bonds at least two substrates of the article according to the invention (preferably, an assembly product). The at least two substrates may be joined adhesively by a layer of the hot melt adhesive composition according to the invention, in sandwich between the two substrates, and/or by spots of the hot melt adhesive composition according to the invention.

The article may be obtained thanks to the method for bonding substrates according to the invention.

The substrates are preferably as described above for the method for bonding substrates according to the invention (including the embodiments and preferred features), in particular at least one of the substrates is a nonwoven fabric (preferably hydrophilic).

The article may be a disposable diaper, disposable training pants, a feminine sanitary napkin or pad, a disposable adult incontinent pad or brief, an absorbent pad, a surgical sheet, a surgical mask, toilet tissues, paper towels or wipes.

### Use of a combination of an acid modified rubber and an acid tackifying resin

The invention also relates to the use of a combination of an acid modified rubber and an acid tackifying resin for improving the aged wet adhesiveness of a hot melt adhesive composition.

The acid modified rubber and the acid tackifying resin are as described above, including the preferred features and embodiments.

The hot melt adhesive composition preferably comprises a styrene block copolymer as described above, including the preferred features and embodiments. Said hot melt adhesive composition may further comprise a non-acid tackifying resin, a plasticizer and/or other additives as described above, including the preferred features and embodiments.

By "aged wet adhesiveness", it is preferably intended a wet adhesiveness measured after at least 3 months of aging.

The aged wet adhesiveness is preferably an aged wet peel strength which may be measured for a non-woven/polyethylene laminated specimen stored for at least 3 months at about 55°C and 50% RH, for example as described in Example 1.

### Use of a non-acid tackifying resin

Finally, the invention relates to the use of a non-acid tackifying resin having a softening point of at least 110°C for improving the initial adhesiveness of a hot melt adhesive composition comprising a combination of an acid modified rubber and an acid tackifying resin.

The non-acid tackifying resin, the acid modified rubber and the acid tackifying resin are as described above, including the preferred features and embodiments.

The hot melt adhesive composition preferably comprises a styrene block copolymer, in particular as described above, including the preferred features and embodiments. Said hot melt adhesive composition may further comprise a plasticizer and/or other additives, preferably as described above, including the preferred features and embodiments.

By "initial adhesiveness", it is preferably intended initial dry peel strength and/or initial wet peel strength, in particular initial wet peel strength.

The initial dry peel strength can be measured for a non-woven/polyethylene laminated specimen at 23°C and 50% RH, for example as described in Example 1.

The initial wet peel strength can be measured for a non-woven/polyethylene laminated specimen at 23°C and 50% RH, for example as described in Example 1.

All the embodiments described above can be combined with each other. In particular, the various aforementioned ingredients in the hot melt adhesive composition, and in particular the preferred embodiments, can be combined with each other.

The following examples are given purely by way of illustration of the invention and should not be interpreted as limiting the scope thereof.

### EXAMPLES

### Example 1: Materials and methods

The following ingredients were implemented:
- YH-188E (by Baling Petrochemical Company, SINOPEC): styrene-butadiene-styrene block copolymer having a styrene content of 32% by weight with respect to the total weight of the copolymer;
- SEBS-6153 (by TSRC Corporation): hydrogenated styrene-ethylene-butadiene-styrene block copolymer (CAS: 66070-58-4) having a styrene content of 27.5-30.5% by weight with respect to the total weight of the copolymer;
- JH8161 (by Ningbo Jinhai Chenguang Chemical Corporation): styrene-isoprene-styrene block copolymer (CAS: 25038-32-8) having a styrene content of 14-18% by weight with respect to the total weight of the copolymer;
- HM-1000 (by Henghe Materials & Science Technology Co., Ltd.): C9 hydrogenated hydrocarbon resin (CAS: 68132-00-3) having a softening point between 95°C and 105°C, non-acid tackifying resin;
- HM-1200 (by Henghe Materials & Science Technology Co., Ltd.): C9 hydrogenated hydrocarbon resin (CAS: 68132-00-3) having a softening point between 115°C and 125°C, non-acid tackifying resin;
- LIR-410 (by Kuraray): polyisoprene-graft-maleic acid monomethyl ester (CAS: 128000-08-8) having a glass transition temperature of about -59°C, acid modified rubber;
- HIKOREZ^{®} R-1100S (by KOLON INDUSTRIES): acid modified petroleum hydrocarbon resin (CAS: 64742-16-1) having an acid value of 2.0-3.0 mg of KOH per gram of resin, acid tackifying resin;
- L-MODU S400 (by Idemitsu Kosan Co.,Ltd): polypropylene;
- N4010 (by PetroChina Karamay Petrochemical Company): naphthenic oil (CAS: 64742-52-5), plasticizer;
- RIANOX^{®} 1010 (by Rianlon): pentaerythritol tetrakis[3-(3,5-di-tert-butyl-4-hydroxyphenyl)propionate] (CAS: 6683-19-8), antioxidant;
- RIANOX^{®} 168 (by Rianlon): tris(2,4-di-tert-butylphenyl) phosphite (CAS: 31570-04-4), antioxidant.

The softening point (SP) of each composition was measured according to the standard GB/T 15332-1994, with a RKA 5 softening point tester (L'Institut franco-allemand de recherches de Saint-Louis (ISL)).

The viscosity of each composition was measured at 160°C according to the standard GB/T 2794-2013, with a Brookfield viscometer.

The glass transition temperature (Tg), the onset crystallization temperature (Tx) and the storage modulus (G') of each composition were all measured with a TA instrument DHR-2.

For measuring the peel strengths, laminated specimens were formed by using a laboratory coater, at 100 meter per minute. Specifically, the composition to be tested was first heated at 150°C and was then applied to a nonwoven fabric (15 g/m² hydrophilic spunbond nonwoven) at 4 g/m² by slot coating with different open times typically from 0.05 to 0.5 s, and nip rolls compression from 10 kPa to 4 mPa. The nonwoven fabric coated with the composition and a polyethylene film were laid one upon another through the composition to obtain a laminate (NW/PE). The laminate was then stored at 25°C under an atmosphere of 50% RH (relative humidity) for 24 hours to cool and solidify the composition. The laminate was then cut in order to obtain test specimens having a width of 25 mm and a length of 100 mm.

The initial dry peel strength was measured on a laminated specimen obtained as described above, shortly after the 24h for cooling and solidifying (at 25°C and 50% RH). The 180° peel test was performed with a peel force tester (MTS SYSTEMS CHINA CO.,LTD) by pulling apart the specimen at a rate of 300 mm/min at 23°C, 50% RH.

The initial wet peel strength was measured as the initial dry peel strength, except that the laminated specimen was immersed in deionized water at 23°C for 4 min, then the water was wiped off before performing the 180° peel test.

The dry peel strength after aging was measured as the initial dry peel strength, except that the specimen was kept for 3 months in an oven at about 55°C and 50% RH (oven by Qingdao Hongzhang Technology Group Co. LTD), before performing the 180° peel test.

The wet peel strength after aging was measured as the dry peel strength after aging, except that after 3 months of aging the specimen was immersed in deionized water at 23°C for 4 min, then the water was wiped off before performing the 180° peel test.

### Example 2: Preparation and properties of hot melt adhesive compositions

Compositions 1-8 were prepared by mixing the ingredients indicated in Table 1 below (the percentages being weight percentages with respect to the total weight of the composition): the ingredients were placed sequentially into a jacketed mixing kettle equipped with a heater and a stirrer, and then mixed while heating at 160°C and at atmospheric pressure for a total mixing time of about 120 min.

In particular, the plasticizer and antioxidants were first mixed. When the antioxidants are dissolved, the polymers (including the styrene block copolymers, the acid modified rubber and polypropylene if any) are added and stirring was carried out until they are melted and dissolved. Then, the tackifying resins (including the non-acid and acid tackifying resins) were added in several times and stirring was carried out until a homogenous composition was obtained.

**Table 1: Ingredients of compositions 1-8**

| **Composition** | **1 (comp)** | **2 (comp)** | **3 (comp)** | **4 (inv)** | **5 (inv)** | **6 (inv)** | **7 (inv)** | **8 (inv)** |
|---|---|---|---|---|---|---|---|---|
| YH-188E | 10% | 10% | 10% | 10% | 10% | 10% | 10% | - |
| SEBS-6153 | - | - | - | - | - | - | - | 10% |
| JH8161 | 10% | 10% | 10% | 10% | 10% | 10% | 10% | 10% |
| HM1000 | 55% | 53% | 30% | 27% | 14% | - | - | - |
| HM1200 | - | - | - | - | 15% | 27% | 24% | 24% |
| LIR-410 | - | 2% | - | 3% | 1% | 3% | 3% | 3% |
| HIKOREZ^{®} R-1100S | - | - | 25% | 25% | 25% | 25% | 25% | 25% |
| L-MODU S400 | - | - | - | - | - | - | 3% | 3% |
| N4010 | 24.4% | 24.4% | 24.4% | 24.4% | 24.4% | 24.4% | 24.4% | 24.4% |
| RIANOX^{®} 1010 | 0.3% | 0.3% | 0.3% | 0.3% | 0.3% | 0.3% | 0.3% | 0.3% |
| RIANOX^{®} 168 | 0.3% | 0.3% | 0.3% | 0.3% | 0.3% | 0.3% | 0.3% | 0.3% |

Their properties were then evaluated as described in Example 1 and the results are indicated in Table 2.

**Table 2: Properties of compositions 1-8**

| **Composition** | **1 (comp)** | **2 (comp)** | **3 (comp)** | **4 (inv)** | **5 (inv)** | **6 (inv)** | **7 (inv)** | **8 (inv)** |
|---|---|---|---|---|---|---|---|---|
| Initial dry peel strength (N/25 mm) | 0.90 | 0.88 | 0.89 | 0.94 | 1.01 | 1.12 | 1.02 | 1.23 |
| Initial wet peel strength (N/25 mm) | 0.31 | 0.49 | 0.85 | 0.85 | 0.89 | 1.01 | 0.89 | 1.03 |
| Dry peel strength after aging (N/25 mm) | ≥0.42 | ≥0.45 | ≥0.50 | ≥0.88 | ≥0.65 | ≥0.93 | ≥0.66 | ≥0.99 |
| Wet peel strength after aging (N/25 mm) | ≥0.15 | ≥0.18 | ≥0.30 | ≥0.64 | ≥0.41 | ≥0.60 | ≥0.41 | ≥0.61 |
| SP (°C) | 79 | 80.3 | 84 | 88.5 | 90.3 | 91.4 | 91.8 | 110.5 |
| Viscosity at 160°C (mPa.s) | 2330 | 2855 | 2530 | 2685 | 2925 | 3300 | 3987 | 7125 |
| Tg (°C) | 10.9 | 8.5 | 13.8 | 12.6 | 17.2 | 18.4 | 20.3 | 21.4 |
| Tx (°C) | 77.2 | 78.6 | 86.8 | 88.3 | 88.4 | 90.3 | 91.6 | 111.9 |
| G' at 40°C (dyn/cm²) | 21574 | 22379 | 20468 | 20650 | 22501 | 25321 | 36096 | 41056 |

The compositions 4-8 according to invention advantageously makes it possible to significantly improve both the dry peel strength after aging and the wet peel strength after aging, while maintaining or increasing the initial dry peel strength and initial wet peel strength.

In particular, the combination of an acid modified rubber and an acid tackifying resin surprisingly increases the dry peel strength after aging by more than two times and the wet peel strength after aging by more than four times, compared to a composition not comprising these ingredients (comparison of composition 4 according to the invention with comparative composition 1).

However, the acid modified rubber alone (i.e. not combined with an acid modified tackifying resin) only have a slight effect on these peel strengths after aging (comparison of comparative compositions 2 and 1), and the acid tackifying resin alone increases the dry peel strength after aging by about 1.2 times and the wet peel strength after aging by about two times (comparison of comparative compositions 3 and 1).

Therefore, the combination of an acid modified rubber and an acid tackifying resin makes it possible to obtain a composition having unexpectedly superior properties, compared to a composition comprising only the acid modified rubber or only the acid tackifying resin.

Furthermore, improved properties are also observed for compositions 5 and 6 according to the invention which comprise another tackifying resin than composition 4 according to the invention, as well as for composition 7 according to the invention which further comprises a polyolefin, and for composition 8 according to the invention which further comprises a polyolefin and a hydrogenated styrene-ethylene-butadiene-styrene block copolymer instead of a styrene-butadiene-styrene block copolymer.

## Claims

1. Hot melt adhesive composition comprising:
- at least one styrene block copolymer,
- at least one acid modified rubber, and
- a tackifying resin comprising at least one acid tackifying resin, said acid tackifying resin comprising at least one carboxylic acid group and/or carboxylic anhydride group.

2. Hot melt adhesive composition according to claim 1, wherein the acid modified rubber is an acid modified rubber comprising carbon-carbon double bonds selected from acid modified polyisoprene, acid modified polybutadiene, acid modified polypentadiene, acid modified butadiene isoprene copolymer, acid modified isobutene isoprene copolymer, acid modified polychloroprene, acid modified nitrile butadiene copolymer, and mixtures thereof.

3. Hot melt adhesive composition according to claim 1 or 2, wherein the acid modified rubber is a rubber comprising carbon-carbon double bonds modified with at least one acid compound comprising at least one non-aromatic carbon-carbon double bond and at least one carboxylic acid group and/or carboxylic anhydride group, such as maleic acid, dimethylmaleic acid, fumaric acid, itaconic acid, tetrahydrophthalic acid, citraconic acid, acrylic acid, methacrylic acid, crotonic acid, isocrotonic acid, tiglic acid, 3-butenoic acid, (2-, 3- or 4-)pentenoic acid, (2-, 3-, 4- or 5-)hexenoic acid, cinnamic acid, sorbic acid and/or derivatives thereof.

4. Hot melt adhesive composition according to any one of claims 1 to 3, wherein the acid modified rubber is liquid at 23°C and at atmospheric pressure.

5. Hot melt adhesive composition according to any one of claims 1 to 4, wherein the total content of the at least one acid modified rubber in the hot melt adhesive composition is comprised between 1 % and 15 % by weight with respect to the total weight of said composition, preferably between 2 % and 10 % by weight, more preferably between 2 % and 5 % by weight.

6. Hot melt adhesive composition according to any one of claims 1 to 5, wherein the acid tackifying resin is an acid modified tackifying resin.

7. Hot melt adhesive composition according to claim 6, wherein the acid modified tackifying resin is selected from acid modified phenolic terpene resins, acid modified petroleum resins and mixtures thereof, preferably from acid modified petroleum resins and mixtures thereof.

8. Hot melt adhesive composition according to claim 6 or 7, wherein the acid modified tackifying resin is a tackifying resin modified with at least one acid compound comprising at least one non-aromatic carbon-carbon double bond and at least one carboxylic acid group and/or carboxylic anhydride group.

9. Hot melt adhesive composition according to any one of claims 1 to 8, wherein the tackifying resin further comprises at least one non-acid tackifying resin.

10. Hot melt adhesive composition according to claim 9, wherein the non-acid tackifying resin is selected from:
- glycerol and pentaerythritol esters of natural and modified rosins, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures,
- phenolic-modified terpene resins, such as those resulting from the condensation, in an acidic medium, of a terpene and a phenol,
- aliphatic petroleum hydrocarbon resins (C5) resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9) resulting from the polymerization of a blend of aliphatic C5- and aromatic C9-hydrocarbon monomers,
- dicyclopentadiene petroleum resins (DCPD) resulting from the polymerization of dicyclopentadiene monomers,
- their corresponding totally or partially hydrogenated derivatives, and
- mixtures thereof.

11. Use of the hot melt adhesive composition according to any one of claims 1 to 10, as an adhesive for bonding two substrates together, or as a coating on the surface of a substrate.

12. Method for bonding substrates comprising:
- heating the hot melt adhesive composition according to any one of claims 1 to 10 for at least a period of time long enough to render said composition liquid enough to be applied on a substrate, then
- coating said composition on a surface of a first substrate, then
- contacting the coated surface of the first substrate with a surface of a second substrate, so as to form an adhesive joint bonding the two substrates.

13. Article comprising the hot melt adhesive composition according to any one of claims 1 to 10.

14. Use of a combination of an acid modified rubber and an acid tackifying resin for improving the aged wet adhesiveness of a hot melt adhesive composition.

15. Use of a non-acid tackifying resin having a softening point of at least 110°C for improving the initial adhesiveness of a hot melt adhesive composition comprising a combination of an acid modified rubber and an acid tackifying resin.
